# EUROPÄISCHE PATENTSCHRIFT

(11) **EP 1 229 799 B1**
(45) Veröffentlichungstag und Bekanntmachung des Hinweises auf die Patenterteilung: **04.08.2004**
(21) Anmeldenummer: 00981224.9
(22) Anmeldetag: 26.10.2000
(51) Int. Cl.: A22C 11/12

(54) **VERSCHLIESSVORRICHTUNG FÜR SCHLAUCHFÖRMIGE VERPACKUNGEN**
CLOSING DEVICE FOR TUBULAR PACKAGINGS
DISPOSITIF DE FERMETURE POUR EMBALLAGES TUBULAIRES

(30) Priorität: 09.11.1999 DE 19953694
(43) Veröffentlichungstag der Anmeldung: 14.08.2002
(73) Patentinhaber: Poly-clip System GmbH & Co. KG, 60489 Frankfurt am Main (DE)
(72) Erfinder: TÖPFER, Klaus, 64572 Büttelborn (DE)
(74) Vertreter: Eisenführ, Günther, Dipl.-Ing.
(86) Internationale Anmeldenummer: PCT/EP2000/010719
(87) Internationale Veröffentlichungsnummer: WO 2001/033970

(56) Entgegenhaltungen:
- EP-A- 0 059 501
- DE-C- 3 705 829
- GB-A- 1 099 135
- US-A- 3 543 378

## Beschreibung

Die Erfindung betrifft eine Vorrichtung zum Verschließen von schlauchförmigen Verpackungen, die - wie beispielsweise Wurstenden - im Verschließbereich zu einem Zopf gerafft sind, mittels einer plastisch verformbaren, insbesondere metallischen Verschlußklammer, mit einer Matrize und einem zu einer Stempeleinrichtung gehörenden Stempel, die aus einer Ruhestellung, in der sie sich außerhalb des von der gefüllten Verpackung eingenommenen Raumes befinden, gegeneinander in eine Arbeitsstellung am Zopf bewegbar sind, und mit einem ortsfesten Magazin zum Zuführen von Verschlußklammern in den Vorschubweg eines in der Stempeleinrichtung verschiebbaren Stempels.

Verschließvorrichtungen dieser Art, die üblicherweise einer Füllmaschine für Würste o.ä. nachgeschaltet werden, sind vielfältig bekannt und haben sich bewährt. Sie sind regelmäßig im Bereich von Spreizverdrängern vorgesehen, die den Zopf zwischen zwei aufeinanderfolgenden Verpackungen bilden. Sobald die Verdränger gespreizt sind und den Zopf gebildet haben, fahren Matrize und Stempel zwischen den Verdrängern gegen den Zopf und verschließen diesen durch Setzen einer Verschlußklammer; tatsächlich im allgemeinen durch zwei in gewissem Abstand gesetzte Verschlußklammern, so daß zwischen diesen die benachbarten Packungen voneinander getrennt werden können.

Bei der aus der US-A-3,543,378 bekannten Vorrichtung sind die Matrizen für die beiden Verschlussklammem an den senkrecht zum Vorschubweg der Stempel verschiebbaren Verdrängern befestigt, so dass sie im Schließzustand der Verdränger mit den Stempeln fluchten. Die beiden Magazine mit den Verschlussklammem sind ortsfest an der ebenfalls ortsfesten Stempeleinrichtung befestigt.

Wegen des begrenzten Raumes zwischen den Verdrängern (in den hinein das Magazin nicht einführbar ist), muss die Stempeleinrichtung mit den Magazinen mit relativ großem Abstand von der Verschlussstelle angeordnet werden. Das bedingt einen entsprechend langen Vorschubweg für die Verschlußklammer und einen ebenso großen Vorschubweg des Stempels, was wiederum einen entsprechend langen Hub des Verschließzylinders zur Folge hat.

Bei einem mechanischen Antrieb - etwa durch eine Kurvenscheibe - ist das Problem das gleiche, wie die DE-A-1 123 588 (Fig. 4) deutlich macht. Beim fluidischen (im allgemeinen pneumatischen) Antrieb kommt jedoch noch ein erheblicher Luftverbrauch hinzu, weil die Zylindergröße auf die beim Verschließen benötigte Kraft abgestellt werden muss, der dafür benötigte Hub aber nur einen kleinen Teil des vorstehend angesprochenen Gesamthubs ausmacht.

Zur Lösung dieses apparativen und betrieblichen Problems sieht die Erfindung - von der eingangs geschilderten Vorrichtung ausgehend - vor, dass die Stempeleinrichtung mit dem Stempel relativ zum Magazin beweglich ist, wobei das Magazin (nur) in der Ruhestellung der Stempeleinrichtung nahe deren Verschlussklammer-Austrittsöffnung in den Vorschubweg des Stempels mündet. In ihrer Ruhestellung entnimmt die Stempeleinrichtung die für den nächsten Arbeitszyklus benötigte Verschlussklammer dem Magazin und hält diese von vornherein in der Nähe ihrer Austrittsöffnung bereit. Wird anschließend die Stempeleinrichtung an den Zopf herangeführt, braucht der Stempel nur noch einen kurzen Hub auszuführen, um die Verschlussklammer - mit Hilfe der gegenüberliegenden Matrize - um den Zopf herum zu befestigen. Entsprechend kurz kann im Falle eines pneumatischen Stempelantriebs der Verschließzylinder ausgeführt und luftsparend betrieben werden. Hinzu kommt, dass das Vereinzeln der Verschlussklammer und ihre Bereitstellung in der Nähe des Befestigungsortes schon während des Füllens der anschließend zu verschließenden Verpackung erfolgt, wodurch entsprechend Betriebszeit eingespart wird.

Vorsorglich sei an dieser Stelle angemerkt, dass anstelle der Zuführung und Vereinzelung der jeweiligen Verschlussklammer an der Stempeleinrichtung dies auch an der Matrize erfolgen könnte; es ist in der Verschlussklammertechnik an sich bekannt, die Anordnung so zu treffen, dass eine Verschlussklammer in der Matrize bereitgehalten und nach Einlegen des Zopfes vom Stempel verschlossen wird. Vorliegend würde im Falle dieser 'kinematischen Umkehr' das Magazin ortsfest derart anzuordnen sein, daß es sich in der Ruhestellung der Matrize nahe deren Aufnahme für eine Verschlußklammer befände; ein entsprechender Mechanismus wäre alsdann für die Abgabe der vereinzelten Verschlußklammer in die Matrize zuständig. Bevorzugt ist jedoch die oben geschilderte Ausbildung.

Im allgemeinen wird man den Vorschub des Stempels in der Stempeleinrichtung mit Hilfe eines fluidisch betätigten Verschließzylinders - etwa eines Pneumatikzylinders - erfolgen lassen. Dann kann man vorteilhaft die Anordnung derart treffen, daß in der Ruhestellung der Verschließzylinderkolben durch eine kurze Vorschubbewegung eine Verschlußklammer aus ihrer Zuführstellung in eine Bereitschaftstellung bringt. Dies stellt die Vereinzelung der jeweils zum Setzen anstehenden Verschlußklammer dar. Um andererseits die weiterhin im Magazin verbleibenden Verschlußklammern dort zu halten, wenn die Stempeleinrichtung die Ruhestellung verläßt, ist vorzugsweise an der Stempeleinrichtung ein Rückhalteblech angeordnet, welches sich parallel zur Bewegungsbahn der Stempeleinrichtung erstreckt und dieser entsprechend geformt ist.

Um die kurze Vorschubbewegung des Stempels zwecks Vereinzelung der Verschlußklammer auszuführen, ist in Weiterbildung der Erfindung ein mit dem Verschließzylinderkolben koaxialer Hilfszylinderkolben kleineren Durchmessers vorgesehen. Entsprechend gering ist die Druckluftmenge, welche für diesen Vereinzelungs- und Bewegungsvorgang in die Bereitschaftsstellung erfordert. Dabei kann die Anordnung so getroffen sein, daß der Hilfszylinderkolben mittels einer Kolbenstange auf den Verschließzylinderkolben drückt, mit diesem aber nicht fest verbunden ist. Auf diese Weise ist der Verschließzylinderkolben apparativ und betrieblich frei vom Hilfszylinderkolben, und letzterer wird, wenn der Verschießzylinderkolben mit Druckluft beaufschlagt wird, von derselben Luft automatisch wieder in seine Ausgangsstellung zurückgeführt. Die aus der DE 37 05 829 C1 bekannte koaxiale Doppelkolben-Anordnung fürden oben geschilderten langen Vorschubweg hat damit nichts zu tun.

Wie bereits erwähnt, ist es im Stand der Technik bekannt, das Heranbewegen der Matrize und der Stempeleinrichtung an den Verpackungszopf durch Schwenkbewegungen zu bewerkstelligen, wobei zeitlich hintereinander zunächst die Matrize an den Zopf und dann die Stempeleinrichtung an den Zopf und die Matrize geschwenkt wurden. Die Betätigung erfolgte dabei durch eine Kurvenscheibe. Abweichend hiervon sind erfindungsgemäß für die Schwenkbewegungen unabhängig voneinander fluidisch betätigte Zylinder vorgesehen. Das erlaubt eine flexible Veränderung der Steuerzeiten für den Verschließvorgang je nach Art der zu verarbeitenden Verschlußklammern, des Verpackungsdurchmessers, des Verpackungsmaterials etc.

Es ist ferner vorteilhaft, an der Matrize ein mit einem trichterförmigen Einschnitt versehenes Einweiserblech für den Zopf seitlich schwenkbar anzulenken und von einer Feder in eine dem Zopf zugewandte Kipplage gegenüber der Längsachse der Matrize vorzuspannen. Beim Heranschwenken der Matrize an den Zopf gleicht die Kipplage des Einweiserblechs die Abweichung des Schwenkweges von dem einer Längsbewegung aus. Die gelenkige Verbindung des Einweiserblechs mit der Stempeleinrichtung erlaubt das automatische Nachführen des Einweiserblechs beim Abschluß der Schwenkbewegung der Stempeleinrichtung. Zur weiteren Sicherung der endgültigen Relativlage der Matrize gegenüber der Stempeleinrichtung - mit dem im Einschnitt des Einweiserblechs gefangenen Zopf - kann weiter vorgesehen sein, daß in der Arbeitsstellung am Zopf das Einweiserblech in einen Schlitz an der Stempeleinrichtung eingreift.

Die Zeichnung veranschaulicht die Erfindung an einem Ausführungsbeispiel. Darin zeigt:
- Fig. 1: in Seitenansicht eine erfindungsgemäße Verschließvorrichtung (in der Ruhestellung nach Abschluß eines Verschließvorganges);
- Fig. 2: in gleicher Seitenansicht nach Überführen einer Verschlußklammer in ihre Bereitschaftsstellung für den nächsten Verschließvorgang;
- Fig. 3: in gleicher Seitenansicht die Betriebsstellung der Verschließvorrichtung unmittelbar vor dem Setzen der Verschlußklammer;

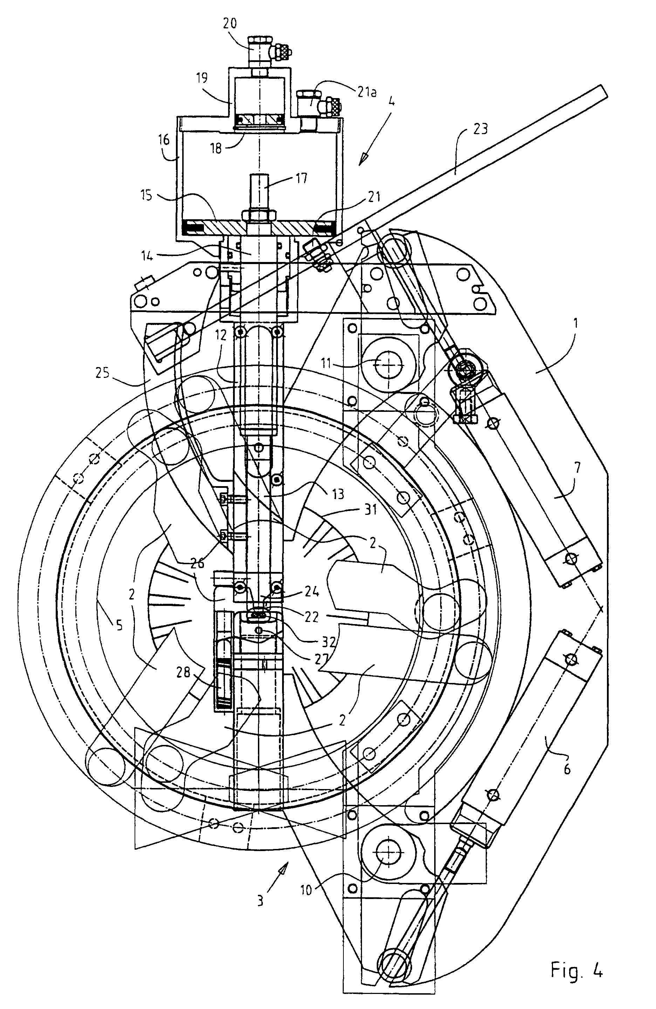

- Fig. 4: eine der Fig. 3 entsprechende Darstellung unmittelbar nach dem Setzen der Verschlußklammer; und
- Fig. 5: eine Stirnansicht der Verschließvorrichtung.

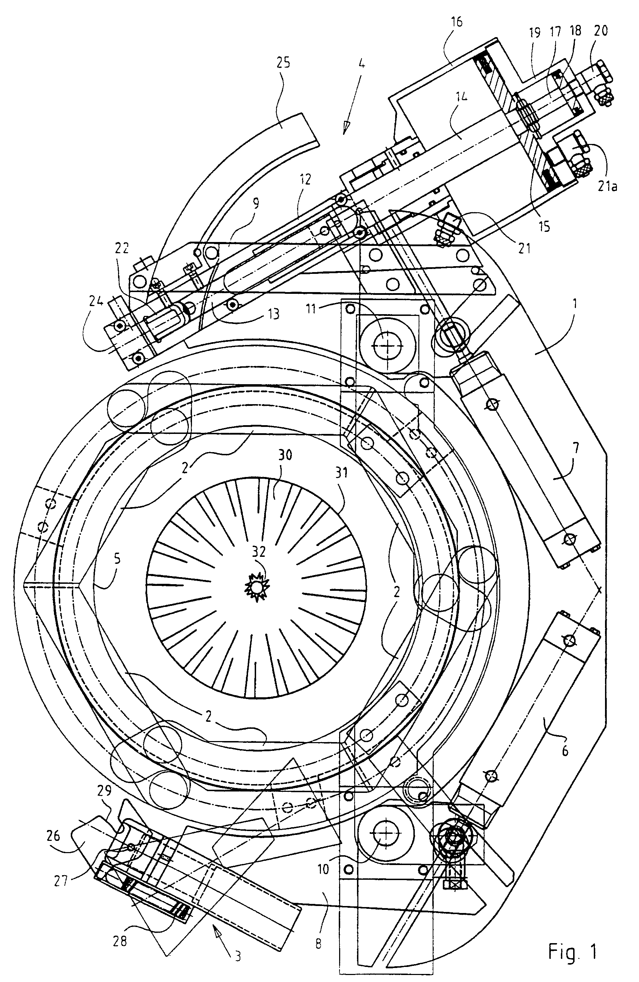

Ein in geeigneter Weise am (nicht dargestellten) Maschinenständer befestigter Träger 1 dient als Montagebasis für die verschiedenen Komponenten der Verschließvorrichtung, nämlich die Verdränger 2, die Matrize 3 und die Stempeleinrichtung 4 (sowie eine in Fig. 1 nicht dargestellte Trenneinrichtung). Sie sind um einen zentralen Kreisdurchlaß 5 im Träger 1 gruppiert und damit koaxial zur Achse 41 eines Füllrohrs 40 einer Füllmaschine für die zu verschließenden Verpackungen angeordnet. Fig. 1 zeigt in Stirnansicht eine sich im Zentrum des Durchlasses 5 befindliche Verpackung in Form einer Wurst 30, deren schlauchförmige Verpakkungshülle 31 zum Zwecke des Verschließens zu einem Zopf 32 zusammengerafft und mittels einer - dort nicht näher dargestellten - Verschlußklammer verschlossen worden war.

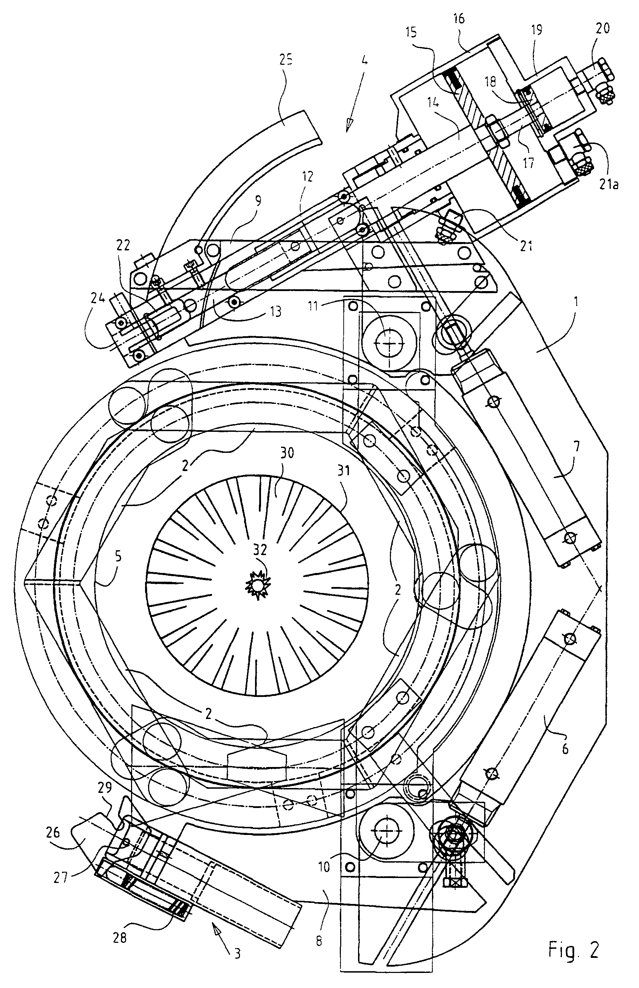

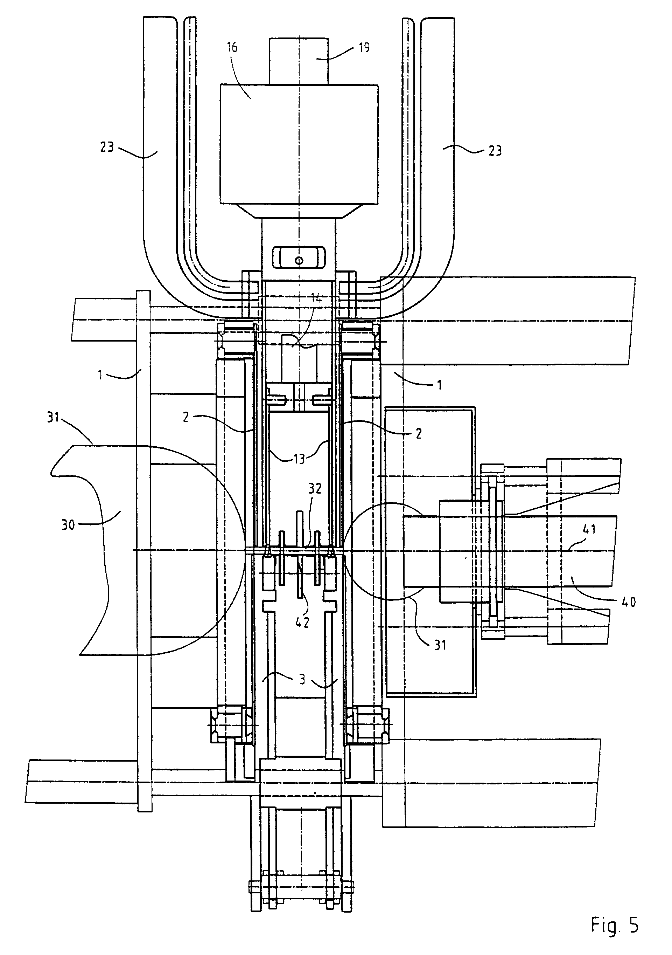

Die beiden gemeinsam einen Spreizverdränger bildenden Verdränger 2 (gespreizter Zustand in Fig. 5) sind von der Art, welche in der deutschen Patentanmeldung 199 34 154.0 beschrieben ist. Fig. 1 (ebenso wie Fig. 2) zeigt die Verdränger 2 im geöffneten Zustand ihrer Elemente, so daß sie das Füllen der nächsten Verpackung nicht behindern. Auch die Matrize 3 und die Stempeleinrichtung 4 sind herausgeschwenkt, und zwar mit Hilfe von Pneumatikzylindern 6 bzw. 7; diese wirken auf Schwenkbleche 8 bzw. 9 ein, welche auf Schwenkzapfen 10 bzw. 11 gelagert sind und die Matrize 3 bzw. die Stempeleinrichtung 4 tragen.

Die Stempeleinrichtung 4 besteht im wesentlichen aus einem Stempelgehäuse 12, in welchem der Stempel 13 längsverschieblich geführt ist. Er ist mit der Kolbenstange 14 des Kolbens 15 eines pneumatischen Verschließzylinders 16 verbunden. Auf der der Kolbenstange 14 gegenüberliegenden Seite des Verschließzylinderkolbens 15 ist koaxial eine Stange 17 befestigt, auf die - unverbunden - der Kolben 18 eines ebenfalls pneumatischen Hilfszylinders 19 wirkt, wenn dieser durch den Einlaß 20 oberseitig mit Druckluft beaufschlagt wird.

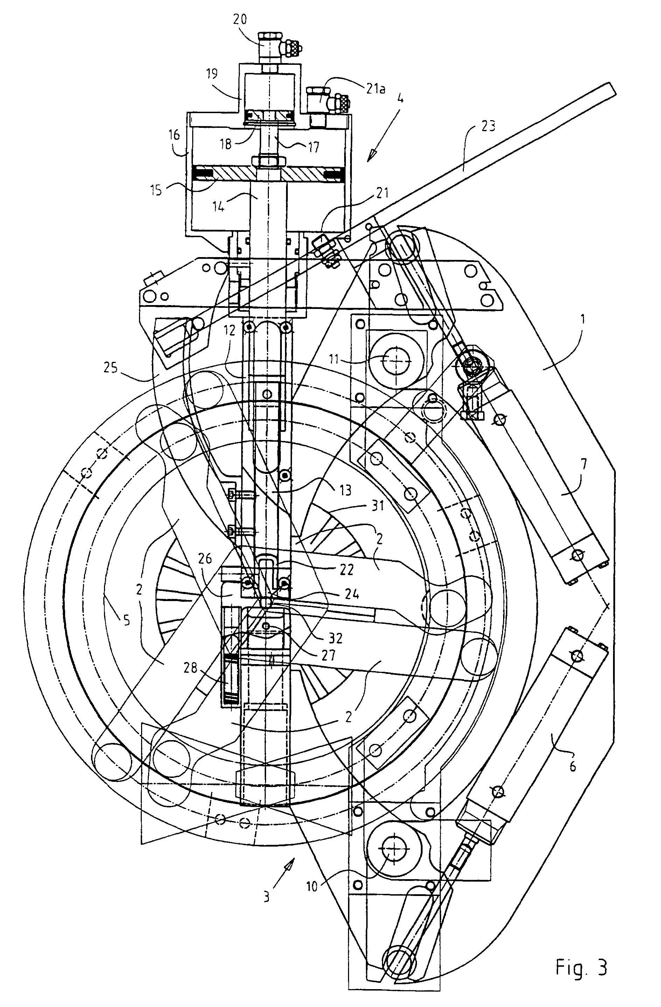

Fig. 1 zeigt die Stempeleinrichtung in der Ruhestellung, welche durch Einführen von Druckluft in den Einlaß 21 unterhalb des Verschließzylinderkolbens 15 erreicht wurde; dabei ist mittels der Stange 17 auch der Hilfszylinderkolben 18 in seine Ruhe-Ausgangsstellung zurückgeschoben worden. In dieser Stellung wird eine Verschlußklammer 22 aus einem Magazin 23 (Fig. 3) in den Vorschubweg des Stempels 13 geschoben, und zwar durch einen nahe der Verschtußklammer-Austrittsöffnung 24 des Stempelgehäuses 12 angeordneten Einlaß vor dem Wirkende des Stempels 13. Fig. 2 veranschaulicht, daß hierauf Druckluft durch den Einlaß 20 auf die Oberseite des Hilfszylinderkolbens 18 gegeben wird, so daß dieser den Verschließzylinderkolben 15 vorschiebt, bis der Hilfszylinderkolben 18 an einem Anschlag am Ende des Hilfszylindergehäuses zum Stehen kommt. Die Bewegung des Hilfszylinderkolbens 15 verschiebt den Stempel 13 in Vorschubrichtung und führt dadurch die Verschlußklammer 22 in eine noch näher der Verschlußklammer-Austrittsöffnung 24 gelegene Position, welche eine Bereitschaftsstellung der Verschlußklammer 22 für den anschließenden Verschließvorgang darstellt.

Beim Verschließvorgang (nach Füllen der Verpackungshülle 31 zur Bildung der nächsten Wurst 30) treten in bekannter Weise die Verdränger 2 in Funktion und bilden hinter der Wurst 30 wiederum einen Zopf 32 (Fig. 3), welcher durch Spreizen beider Verdränger entsprechend verlängert wird (Fig. 5). In den dadurch gebildeten Zwischenraum werden die - jeweils doppelt vorhandenen - Matrizen 3 und Stempeleinrichtungen 4 mit Hilfe der Pneumatikzylinder 6, 7 an den Zopf 32 herangeschwenkt; Fig. 3 veranschaulicht diesen Zustand. Bei diesem Heranschwenken verhindert ein an der Stempeleinrichtung befestigtes, entsprechend der Schwenkbewegung gekrümmtes Rückhalteblech 25, daß die Im ortsfesten Magazin 23 unter Federvorspannung stehenden Verschlußklammern 22 herausgeschoben werden.

Seitlich an der Matrize 3, welche in ihrer Arbeitsstellung am Zopf 32 in üblicher Weise die beiden Schenkel der Verschlußklammer 22 um den Zopf herumbiegt, ist ein Einweiserblech 26 um einen Stift 27 schwenkbar gelagert und wird in die in den Fig. 1 und 2 dargestellte Kippstellung durch eine Feder 28 vorgespannt. Ein trichterförmiger Einschnitt 29 des Einweiserblechs 26 erfaßt beim Heranschwenken der Matrize 3 an den Zopf 32 diesen und fixiert seine Stellung in Bezug auf die Matrize 3 sowie - durch Eindringen des Einweiserblechs 26 in einen (nicht dargestellten) Schlitz an der Stempeleinrichtung 4 - auch in Bezug auf die Stempeleinrichtung sowie die von dieser bereitgehaltene Verschlußklammer 22. Fig. 3 zeigt den alsdann erreichten Betriebszustand. Hierauf wird durch den Einlaß 21 a Druckluft auf die Oberseite des Verschließzylinderkolbens 15 gegeben, so daß dieser den Stempel 13 mit der erforderlichen Kraft aus der Austrittsöffnung 24 heraus gegen die Matrize 3 drückt und auf diese Weise den Zopf 32 der Verpackungshülle 31 verschließt.

Fig. 5 veranschaulicht - wie bereits gesagt - daß sowohl die Verdränger als auch die Verschließeinrichtungen in bekannter Weise doppelt vorhanden sind, so daß in dem in Fig. 5 dargestellten gespreizten Zustand der Verdränger 2 die beiden Verschließeinrichtungen (mit zwei Matrizen 3 und zwei Stempeleinrichtungen 4) zwei Verschlußklammern 22 in solchem Abstand voneinander auf dem Zopf 32 befestigen, daß eine Trenneinrichtung 42 den Zopf 32 zwischen den beiden Verschlußklammern 22 durchschneiden kann.

## Patentansprüche

1. Vorrichtung zum Verschließen von schlauchförmigen Verpackungen, die - wie beispielsweise Wurstenden - im Verschließbereich zu einem Zopf gerafft sind, mittels einer plastisch verformbaren, insbesondere metallischen Verschlussklammer, mit einer Matrize und einem zu einer Stempeleinrichtung gehörenden Stempel, die aus einer Ruhestellung, in der sie sich außerhalb des von der gefüllten Verpackung eingenommenen Raumes befinden, gegeneinander in eine Arbeitsstellung am Zopf bewegbar sind,
und mit einem ortsfesten Magazin zum Zuführen von Verschlussklammern in den Vorschubweg eines in der Stempeleinrichtung verschiebbaren Stempels,
**dadurch gekennzeichnet, dass** die Stempeleinrichtung (4) mit dem Stempel (13) relativ zum Magazin (23) beweglich ist, wobei das Magazin (23) nur in der Ruhestellung der Stempeleinrichtung (4) nahe deren Verschlussklammer-Austrittsöffnung (24) in den Vorschubweg des Stempels (13) mündet.

2. Vorrichtung nach Anspruch 1,
**dadurch gekennzeichnet, dass** der Vorschub des Stempels (13) in der Stempeleinrichtung (4) mit Hilfe eines fluidisch betätigten Verschlusszylinders erfolgt.

3. Vorrichtung nach Anspruch 2,
**dadurch gekennzeichnet, dass** in der Ruhestellung der Verschließzylinderkolben (15) durch eine kurze Vorschubbewegung eine Verschlussklammer (22) aus ihrer Zuführstellung in eine Bereitschaftsstellung bringt.

4. Vorrichtung nach Anspruch 3,
**dadurch gekennzeichnet, dass** ein mit dem Verschließzylinderkolben (15) koaxialer Hilfszylinderkolben (18) kleineren Durchmessers die kurze Vorschubbewegung ausführt.

5. Vorrichtung nach Anspruch 4,
**dadurch gekennzeichnet, dass** der Hilfszylinderkolben (18) mittels einer Kolbenstange (17) auf den Verschließzylinderkolben (15) drückt, mit diesem aber nicht fest verbunden ist.

6. Vorrichtung nach Anspruch 1,
**dadurch gekennzeichnet, dass** an der Stempeleinrichtung (4) ein Rückhalteblech (25) für die Verschlussklammern (22) im Magazin (23) angeordnet ist, welches sich parallel zur Bewegungsbahn der Stempeleinrichtung (4) erstreckt und dieser entsprechend geformt ist.

7. Vorrichtung nach mindestens einem der vorhergehenden Ansprüche mit schwenkbar an den Zopf bewegbarer Matrize und Stempeleinrichtung,
**dadurch gekennzeichnet, dass** für die Schwenkbewegungen unabhängig voneinander fluidisch betätigte Zylinder (6, 7) vorgesehen sind.

8. Vorrichtung nach mindestens einem der vorhergehenden Ansprüche,
**dadurch gekennzeichnet, dass** an der Matrize (3) ein mit einem trichterförmigen Einschnitt (29) versehenes Einweiserblech (26) für den Zopf (32) seitlich schwenkbar angelenkt und von einer Feder (28) in eine dem Zopf zugewandte Kipplage gegenüber der Längsachse der Matrize (3) vorgespannt ist.

9. Vorrichtung nach Anspruch 8,
**dadurch gekennzeichnet, dass** in der Arbeitsstellung am Zopf (32) das Einweiserblech (26) in einen Schlitz an der Stempeleinrichtung (4) eingreift.

## Claims

1. A device for closing tubular packagings which - like for example ends of sausages - are gathered in the closing region to form a braid, by means of a plastically deformable, in particular metallic closure clamp, comprising a die and a ram which is part of a ram device, the die and the ram being movable from a rest position in which they are outside the space occupied by the filled packaging towards each other into a working position at the braid,
and comprising a stationary magazine for feeding closure clamps into the path of forward movement of a ram displaceable in the ram device,
**characterised in that** the ram device (4) with the ram (13) is movable relative to the magazine (23), wherein the magazine (23) opens into the path of forward movement of the ram (13) only in the rest position of the ram device (4) in the proximity of the closure clamp discharge opening (24) of the ram device (4).

2. A device according to claim 1 **characterised in that** the forward movement of the ram (13) in the ram device (4) is produced by means of a fluid-actuated closure cylinder.

3. A device according to claim 2 **characterised in that** in the rest position the closure cylinder piston (15) by a short forward movement moves a closure clamp (22) out of its feed position into a readiness position.

4. A device according to claim 3 **characterised in that** an auxiliary cylinder piston (18) of smaller diameter which is coaxial with the closure cylinder piston (15) performs the short forward movement.

5. A device according to claim 4 **characterised in that** the auxiliary cylinder piston (18) presses by means of a piston rod (17) on the closure cylinder piston (15) but is not fixedly connected thereto.

6. A device according to claim 1 **characterised in that** arranged on the ram device (4) is a retaining plate (25) for the closure clamps (22) in the magazine (23), the plate extending parallel to the path of movement of the ram device (4) and being of a shape corresponding thereto.

7. A device according to at least one of the preceding claims with a ram device and a die pivotably movable to the braid, **characterised in that** cylinders (6, 7) which are fluid-actuated independently of each other are provided for the pivotal movements.

8. A device according to at least one of the preceding claims **characterised in that** a guide plate (26) for the braid (32), the guide plate being provided with a funnel-shaped incision (22), is laterally pivotably mounted to the die (3) and is biased by a spring (38) into a tilted position towards the braid with respect to the longitudinal axis of the die (3).

9. A device according to claim 8 **characterised in that** in the working position at the braid (32) the guide plate (26) engages into a slot on the ram device (4).

## Revendications

1. Dispositif de fermeture pour emballages tubulaires souples qui - comme, par exemple, des extrémités de saucisses - sont froncés pour former une natte dans la zone d'obturation, au moyen d'une agrafe de fermeture plastiquement déformable, notamment métallique, comprenant une matrice et un poinçon faisant partie d'un système de poinçonnage, qui sont mobiles l'un par rapport à l'autre depuis une position de repos dans laquelle ils se trouvent en dehors de l'espace occupé par l'emballage empli, jusqu'à une position de travail sur la natte,
et un magasin fixe conçu pour délivrer des agrafes de fermeture sur le trajet d'avance d'un poinçon pouvant coulisser dans le système de poinçonnage,
**caractérisé par le fait que** le système de poinçonnage (4) est mobile vis-à-vis du magasin (23), conjointement au poinçon (13), ledit magasin (23) ne débouchant sur le trajet d'avance du poinçon (13) que dans la position de repos dudit système de poinçonnage (4), à proximité de l'orifice (24) de ce dernier par lequel les agrafes de fermeture sortent.

2. Dispositif selon la revendication 1,
**caractérisé par le fait que** l'avance du poinçon (13), dans le système de poinçonnage (4), s'effectue à l'aide d'un vérin d'obturation actionné par un fluide.

3. Dispositif selon la revendication 2,
**caractérisé par le fait que**, dans la position de repos, le piston (15) du vérin d'obturation amène une agrafe de fermeture (22) de sa position de délivrance à une position d'attente, par un court mouvement d'avance.

4. Dispositif selon la revendication 3,
**caractérisé par le fait que** le piston (18) d'un vérin auxiliaire, coaxial au piston (15) du vérin d'obturation et présentant un plus petit diamètre, effectue le court mouvement d'avance.

5. Dispositif selon la revendication 4,
**caractérisé par le fait que** le piston (18) du vérin auxiliaire exerce, au moyen d'une tige (17), une pression sur le piston (15) du vérin d'obturation, mais n'est toutefois pas relié audit piston de manière fixe.

6. Dispositif selon la revendication 1,
**caractérisé par le fait qu'**une tôle (25) de retenue des agrafes de fermeture (22) dans le magasin (23), située sur le système de poinçonnage (4), s'étend parallèlement à la trajectoire de mouvement dudit système de poinçonnage (4) et est configurée en concordance avec ce dernier.

7. Dispositif selon au moins l'une des revendications précédentes, équipé d'une matrice et d'un système de poinçonnage mobiles à pivotement vers la natte,
**caractérisé par le fait que** des vérins (6, 7), actionnés par fluide indépendamment l'un de l'autre, sont prévus pour assurer les mouvements pivotants.

8. Dispositif selon au moins l'une des revendications précédentes,
**caractérisé par le fait qu'**une tôle d'orientation (26), destinée à la natte (32) et pourvue d'une encoche infundibuliforme (29), est articulée à pivotement latéral sur la matrice (3) et est précontrainte, par un ressort (28), pour prendre une position tournée vers ladite natte et basculée vis-à-vis de l'axe longitudinal de ladite matrice (3).

9. Dispositif selon la revendication 8,
**caractérisé par le fait que**, dans la position de travail contre la natte (32), la tôle d'orientation (26) pénètre dans une fente pratiquée dans le système de poinçonnage (4).
